# EUROPEAN PATENT APPLICATION

(11) **EP 3 543 803 A1**
(43) Date of publication of application: **25.09.2019**
(21) Application number: 18163272.0
(22) Date of filing: 22.03.2018
(51) Int. Cl.: G05B 13/02, G05B 15/02, G05B 5/01, G05D 23/19

(54) **METHOD OF CONTROLLING A HEATING SYSTEM AND SUCH A HEATING SYSTEM**

(71) Applicant: METRO THERM A/S, 3200 Helsinge (DK)
(72) Inventor: KANSTRUP JENSEN, Michael, 2800 Lyngby (DK); SCHIFTER-HOLM, Torben, 3480 Fredensborg (DK)
(74) Representative: Tellefsen, Jens J.

(57) **Abstract**

The invention relates to a method of controlling a temperature of water to be heated via a heat exchanger. The method comprises the step of detecting a temperature difference between a set temperature and a temperature of water at the outlet from a heat exchanger secondary circuit. The method does not detect a temperature of water at an inlet of the heat exchanger secondary circuit. Also, the method also detects an opening degree of a flow rate regulator valve. The method does not detect a flow rate of the primary circuit hot water and does not detect a flow rate of the secondary circuit water. The invention also relates to a heating system utilizing the method and comprising a PI controller only monitoring a temperature sensor at a heat exchanger secondary circuit outlet and a flow regulator valve at a heat exchanger primary circuit outlet.

## Description

### Field of the Invention

The present invention relates to a method of controlling heating of water in a secondary circuit of a heat exchanger and to a heating system for heating, via a heat exchanger, water at a secondary circuit by use of hot water on a primary circuit. The invention is primarily for heating, in the secondary circuit, tap water of a domestic heating system by hot water in the primary circuit being a district heating circuit.

### Background of the Invention

Method for controlling heating of water via a heat exchanger and such heat exchangers as such are known in many various embodiments. One way of controlling heating is to have various sensors and valves placed on the primary circuit and the secondary circuit to obtain a precise, fast and reliable heating of water of the secondary circuit.

CH 678886 discloses a regulator with a first regulation stage for controlling a mixer valve in the primary heating circuit dependent on the signal provided by a temperature sensor for the heat transfer medium, for maintaining a required temperature calculated in dependence on the measured external temperature and the time of day. CH 678886 also discloses a second valve between the mixer valve and the heat exchanger coupling the primary and secondary circuits, and being controlled by a second regulation stage to determine the flow of the heat transfer medium through the heat exchanger in dependence on the required temperature within the secondary circuit.

### Object of the Invention

The object of the invention is to limit the number of components of a heating system for controlling heating of the water in a secondary circuit of the heating system. The object of the invention is also to limit possible errors occurring, when monitoring and controlling heating of the water in the secondary circuit of the heating system.

### Description of the Invention

The object of the invention is obtained by a heating system operating according to a method comprising the steps of:
- providing a PI controller capable of monitoring a temperature sensor and detecting a temperature of water at an outlet from the heat exchanger secondary circuit water outlet and capable of monitoring and controlling a flow rate regulator valve at an outlet from the heat exchanger primary circuit water outlet,
- setting, in the PI controller, a heating set temperature of the secondary circuit water at the heat exchanger secondary circuit outlet, and the PI controller constantly determining an opening degree of the flow rate regulator valve,
- detecting a temperature difference between the set temperature and a temperature of the water at the outlet from the heat exchanger secondary circuit, and not detecting a temperature of water at an inlet of the heat exchanger secondary circuit,
- at the same time as detecting a temperature difference, also detecting an opening degree of the flow rate regulator valve, and not detecting a flow rate of the primary circuit hot water, and not detecting a flow rate of the secondary circuit water,
- the PI controller determining, when the temperature difference between a temperature of the secondary circuit water at the outlet from the heat exchanger and the set temperature decreases to a value lower than a set temperature difference of more than 0°C, as example a set temperature difference of 0.5°C, and when detected
- the PI controller controlling the opening degree of the flow rate regulator valve so that at least one of the following conditions is established:
- if said temperature difference is lower than the set temperature difference, as example is lower than 0.5°C, the opening degree of the valve having a set initial value between 0% and 20%, possibly between 1% and 15%, possibly between 2% and 8%, of a full opening degree of the valve;
- if said temperature difference is higher than the set temperature difference, as example is higher than 0.5°C, the opening degree of the valve having a subsequent value of more than the set initial value of the full opening degree of the valve.

Using only a temperature sensor of water at the heat exchanger secondary circuit outlet and a flow regulator valve at the heat exchanger primary circuit outlet not only limits the number of components which the PI controller is to monitor and control, it also reduces possible errors occurring during the PI controller's monitoring of the temperature sensor and control of the flow regulator valve.

According to an aspect of the method according to the invention, the PI controller samples the opening degree of the flow rate regulator valve during use of secondary circuit hot water, and the PI controller changes values of the KP factor and the KI factor from initial values before sampling to subsequent values after sampling, and based upon the an average value of the opening degree of the flow rate regulator valve during sampling.

Changing the KP factor and the KI factor of the PI controller, based upon an average value of the opening degree of the flow rate regulator valve during sampling, result in the PI controller constantly, during sampling, adjusting the KP factor and the KI factor to values being optimal for obtaining correct temperature of the water heated in the secondary circuit of the heat exchanger and for obtaining fast and non-damaging control of the flow regulator valve in the primary circuit of the heat exchanger.

According to another aspect of the method according to the invention, the PI controller monitors and detects a temperature response in dependence to the opening degree of the valve, and if the temperature response result in an oscillating temperature curve and results in a plurality of temperature values exceeding a set value temperature more than a certain temperature difference, and within a certain time range, the PI controller controls the opening degree of the valve by decreasing the opening degree, thereby limiting the oscillations and thus limiting, possibly eliminating, temperature values exceeding a set value temperature by more than the certain temperature difference.

Constantly monitoring various temperature responses and opening degrees of the flow regulator valve, and combined with the aspect of the PI controller only monitoring and controlling a temperature sensor at the heat exchanger secondary circuit outlet and a flow regulator valve at the heat exchanger primary circuit outlet, results in a possibility of determining a risk of harmonic pulsations of water, so-called water hammering, even before the harmonic pulsations of water occur, and also results in a possibility of stopping any harmonic pulsations of water occurring.

According to a possible aspect of the method according to the invention, the heating system is capable of entering into an operational mode, a standby mode and a holiday mode,
- where the operational mode is initiated, when the temperature of the second circuit water from the outlet of the heat exchanger decreases to below a value between 45°C and 80°C, preferably decreases to below a value between 45°C and 65°C, possibly decreases to below a value of 52°C, and the opening degree of the flow rate regulator valve is equal to or more than 3%,
- where the standby made is initiated when the opening degree of the flow rate regulator valve is less than 3% for a period of time more than 300 seconds, and during which standby mode the temperature of the second circuit water from the outlet of the heat exchanger is maintained at a limited temperature between 25°C and 55 °C, possibly is maintained at a limited temperature between 30°C and 45°C,
- where the holiday mode is initiated when the heating system has been in standby mode for a period of time more than 1 hour, preferably more than 24 hours, and during which holiday mode the temperature of the second circuit water from the outlet of the heat exchanger is maintained at a limited temperature of less than 30 °C, possibly is maintained at a limited temperature of less than 25°C.

Carefully selecting various temperature intervals and opening degrees of the flow regulator valve, and combined with the aspect of the PI controller only monitoring and controlling a temperature sensor at the heat exchanger secondary circuit outlet and a flow regulator valve at the heat exchanger primary circuit outlet, results in a possibility of switching between an operational mode, a standby mode and a holiday mode, and results in ab optimal switching between the various modes, depending on a use or a non-use of hot water tapped from the secondary circuit.

A heating system according to the invention has a heat exchanger for heating water in a secondary circuit of the heat exchanger by water in a primary circuit of the heat exchanger, said heating system having a temperature sensor at a secondary circuit outlet of water from the heat exchanger, and said heating system having a flow rate regulator valve at a primary circuit outlet of water from the heat exchanger, and said heating system having a PI controller connected to the temperature sensor at the secondary circuit outlet of the heat exchanger and having the PI controller connected to the flow rate regulator valve at the primary circuit outlet of the heat exchanger, and the PI controller not being connected to, and the PI controller therefore not monitoring, a temperature sensor at a secondary circuit inlet of water to the heat exchanger.

The applicant has surprisingly been able to eliminate the need for the PI controller being connected to a temperature sensor at a secondary circuit inlet of water to the heat exchanger. Normally, this feature is needed for obtaining correct temperature at the heat exchanger secondary circuit outlet, if control of said temperature is performed by a flow rate regulator valve at the primary circuit outlet from the heat exchanger.

In a preferred embodiment of the heating system according to the invention, the PI controller of the heating system not being connected to, and the PI controller therefore not monitoring, a flow rate sensor at a secondary circuit outlet of water from the heat exchanger.

Also, the applicant has surprisingly been able to eliminate the need for the PI controller being connected to a flow rate sensor at a secondary circuit outlet of water to the heat exchanger. Normally, this feature is needed for obtaining correct temperature at the heat exchanger secondary circuit outlet, if control of said temperature is performed by a flow rate regulator valve at the primary circuit outlet from the heat exchanger.

In another preferred embodiment of the heating system according to the invention, the PI controller of the heating system not being connected to, and the PI controller therefore not monitoring, a flow rate sensor at a secondary circuit inlet of water to the heat exchanger.

Also, surprisingly, the applicant has been able to eliminate the need for the PI controller being connected to a flow rate sensor at a secondary circuit inlet of water to the heat exchanger. Normally, this feature is needed for obtaining correct temperature at the heat exchanger secondary circuit outlet, if control of said temperature is performed by a flow rate regulator valve at the primary circuit outlet from the heat exchanger.

In still another preferred embodiment of the heating system according to the invention, the PI controller of the heating system not being connected to, and the PI controller therefore not monitoring, a temperature sensor at a primary circuit outlet of water from the heat exchanger

Also, surprisingly, the applicant has been able to eliminate the need for the PI controller being connected to a temperature sensor at a primary circuit outlet of water to the heat exchanger. Normally, this feature is needed for obtaining correct temperature at the heat exchanger secondary circuit outlet, if control of said temperature is performed by a flow rate regulator valve at the primary circuit outlet from the heat exchanger.

In yet another preferred embodiment of the heating system according to the invention, PI controller of the heating system not being connected to, and the PI controller therefore not monitoring, a temperature sensor at a primary circuit inlet of water to the heat exchanger.

Also, surprisingly, the applicant has been able to eliminate the need for the PI controller being connected to a temperature sensor at a primary circuit inlet of water to the heat exchanger. Normally, this feature is needed for obtaining correct temperature at the heat exchanger secondary circuit outlet, if control of said temperature is performed by a flow rate regulator valve at the primary circuit outlet from the heat exchanger.

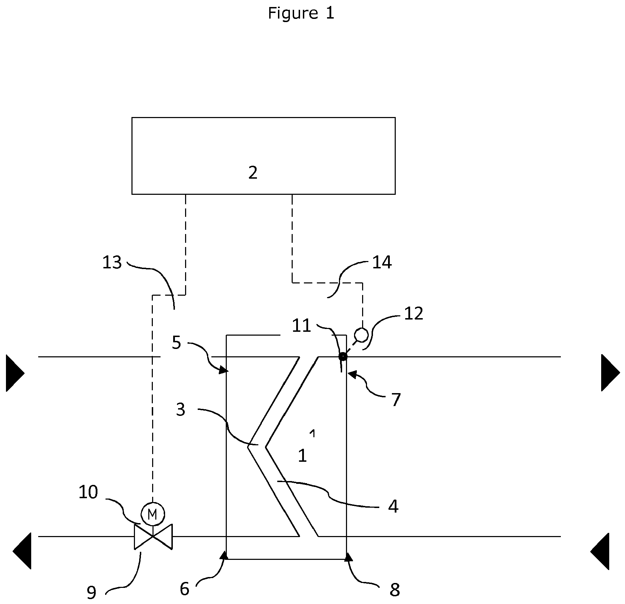

### Description of the Drawing

The drawing is a diagram showing the heating system according to the invention.

### Detailed Description of the Invention

The drawing shows a diagram of selected components of a heating system. The heating system comprises a heat exchanger 1 and a PI controller 2. The heating system has a primary circuit 3 of pipes or tubes for water and a secondary circuit 4 of pipes or tubes for water. The primary circuit 3 water is hot and is intended for heating the secondary circuit 4 water. The primary circuit 3 water is heated by an external heating source (not shown). The external heating source is preferably a district heating water pipeline. However, the external heating source may also be a heat pump extracting heat from the air or from the ground or from a lake or other external source of heat capable of providing heat to a heat pump. The external heating source may also be a gas burner or an oil burner, a stove fired by firewood or wood pellets, or a solar water heater.

The secondary circuit 4 water is preferably tap water for use in a kitchen, in a bathroom or in another domestic location. However, the secondary circuit 4 water may also be water for a non-domestic location, such as industry, a leisure site such as swimming stadium or a camping site or another site larger than a domestic home.

The heating system has a water inlet 5 to the heat exchanger 1 for primary circuit 3 hot water, an water outlet 6 from the heat exchanger 1 for primary circuit 3 de-heated water, a water inlet 7 to the heat exchanger 1 for secondary circuit 4 non-heated water, and a water outlet 8 from the heat exchanger 1 for secondary circuit 4 heated water.

The heating system also has a flow rate regulating valve 9 situated at the heat exchanger primary circuit outlet 6. The flow rate regulating valve 9 has an actuator 10. The flow rate regulating valve 9 is a preferably a differential pressure valve. Relieving any pressure difference across the valve has the advantage that no pressure difference across the valve influences a relation between the opening degree of the valve and the flow of water through the valve. A certain opening degree of the valve results in a certain flow of water through the valve over the entire opening degree spectrum of the valve, without any pressure difference having any influence on the relation between the opening degree of the valve and the flow of water through the valve.

The heating system also has a temperature sensor 11 situated at the heat exchanger secondary circuit outlet 7. The temperature sensor has a transducer 12. The heating system does not have flow sensors and the heating system does not have additional temperature sensors, neither at the inlets 5,7, nor at the outlets 6,8, of the primary circuit 3 or the secondary circuit 4, respectively.

The PI controller 2 is electrically connected, along a wired connection 13 and 14, or via a wireless connection, to the actuator 10 of the flow rate regulating valve 9, and to the transducer 12 of the temperature sensor 11, respectively. The PI controller 2 is capable of controlling, via the actuator 10, an opening degree of the flow rate regulating valve 9. The actuator 10 is configured for adjusting a position of a valve body of the valve. The actuator 10 of the flow rate regulating valve 9 is preferably a stepper motor. The PI controller 2 is also capable of detecting, via the transducer 12 of the temperature sensor 11, a temperature of the heat exchanger secondary circuit outlet 8.

The function of the heating system will hereafter be described.

Primary circuit hot water flows through the heat exchanger whenever secondary circuit water is to be heated. Establishing when secondary circuit water is to be heated is determined by detecting the temperature at the heat exchanger secondary circuit outlet. A heating temperature is set in the PI controller, said heating temperature determining when the secondary circuit water is to be heated. When the temperature of the secondary circuit water decreases to a value below the set heating temperature, the opening degree of the flow rate regulating valve is increased more or less, depending on various parameters related to the temperature decrease of the secondary circuit water and related to the initial opening degree of the flow rate regulating valve.

Initially, when the opening degree of the flow rate regulating has been below 1% of the full opening degree of the valve for at least 15 seconds, the PI controller determines that no secondary circuit water is used. When secondary circuit water is being used, the PI controller detects when a difference between the temperature of the secondary circuit water at the heat exchanger secondary circuit outlet and the set heating temperature is below zero. When a difference between the temperature of the water from the secondary circuit heat exchanger outlet and the set heating temperature is below zero, the PI controller initiates control of the actuator to increase the opening degree of the valve. Initially, the PI controller controls the actuator to increase the opening degree of the valve to 3% of full opening degree of the valve.

Initial values of a KP-factor and a KI-factor are then determined based upon empirical data obtained from tests of the heating system or a heating system similar to the heating system installed at the domestic or other site. The KP-factor and the KI-factor are determined in dependence of the opening degree of the valve. Specific functions for calculating the KP-factor and the KI-factor are derived based upon the empirical data.

Basically, the PI controller controls the opening degree of the valve so that opening of the valve is slower at relatively small openings degrees of the valve, and so that opening of the valve is faster at relatively larger opening degrees of the valve.

When use of hot water is initiated, either from a hot water tap or from a heat source like a radiator, initially the PI controller operates with an opening degree of the valve of 3% of full opening degree of the valve. An initial opening degree of the valve of 3% determines initial values of the KP-factor and the KI-factor. The initial values of the KP-factor and the KI-factor are used by the PI controller in subsequent control of the opening degree of the valve.

However, at the same time as the PI controller initiates control of the opening degree of the valve based upon an opening degree of the valve of 3% of full opening degree of the valve, the PI controller samples the actual opening degree of the valve. Sampling is performed a selected number of times within a selected period of time. As example, the PI controller may sample the actual opening degree of the valve 6 times within a period of time of 0.6 seconds, thus sampling the actual opening degree of the valve every 0.1 second.

Based upon sampling of the actual opening degree of the valve, the PI controller determines an average actual opening degree of the valve during the period of time, when sampling has been performed. Based upon the determination of an average actual opening degree of the valve during the period of sampling, the PI controller adjusts the KP-factor and the KI-factor to possible other values, lower or higher than the initial values of the KP-factor and the KI-factor, and which correlates with the average actual opening degree of the valve and with the function, which the KP-factor and the KI-factor is part of, and which function the PI controller uses for control of the opening degree of the valve.

By constantly sampling the actual opening degree of the valve and by constantly adjusting the KP-factor and the KI-factor accordingly, the KP-factor and the KI-factor will constantly have optimal values for control of the opening degree of the valve.

Depending on any fluctuations on the use of hot water after hot water use is initiated, the number of sampling periods may be higher or lower. As example, the sampling frequency may be 0.1 second and the minimum number of samplings may be six, that is, a minimum sampling period of 0.6 seconds. The PI controller then uses the average of the six sampled values of opening degree of the valve as input for possibly adjusting the KP-factor and the KI-factor.

Sampling is used for calculating and adjusting the KP-factor and the KI-factor to values used as new set-points of the KP-factor and the KI-factor. Sampling and calculation and adjustment of the KP-factor and the KI-factor is performed within a period of time being at least as long as the actual temperature of hot water in the secondary circuit is outside a dead-band of, as example, plus or minus 0.5°C compared to a set temperature of hot water in the secondary circuit.

Possibly and normally, sampling within a period of time between 5 seconds and 20 seconds is sufficient amount of time for calculating and adjusting the KP-factor and the KI-factor to the present usage of hot water, so that the actual temperature of hot water in the secondary circuit is within a dead-band of, as example, plus or minus 0.5°C compared to a set temperature of hot water in the secondary circuit.

The dead-band values determining when sampling and calculation and adjustment of the KP-factor and the KI-factor is performed may be other than plus or minus 0.5°C compared to a set temperature of hot water in the secondary circuit. Also, a dead-band may have a higher or lower plus value than the minus value, or vice versa, compared to a set temperature of hot water in the secondary circuit.

As example, if the period of time where sampling and calculation and adjustment of the KP-factor and the KI-factor is performed is 10 seconds, until the actual temperature of hot water in the secondary circuit is within a dead-band of, as example, plus or minus 0.5°C compared to a set temperature of hot water in the secondary circuit, a total number of approximately 100 samplings will have taken place.

Either, both sampling and calculation and adjustment of the KP-factor and the KI-factor is performed only when the actual temperature of hot water in the secondary circuit is outside a dead-band of, as example, plus or minus 0.5°C compared to a set temperature of hot water in the secondary circuit.

Or, sampling is performed continuously, and calculation and adjustment of the KP-factor and the KI-factor is performed only when the actual temperature of hot water in the secondary circuit is outside a dead-band of, as example, plus or minus 0.5°C compared to a set temperature of hot water in the secondary circuit

The KP-factor and the KI-factor are used for a period of time, but only until the actual temperature of hot water in the secondary circuit changes to a temperature outside a dead-band of, as example, plus or minus 0.5°C compared to a set temperature of hot water in the secondary circuit. At any later time, where new use of hot water is initiated, one or more new periods of sampling of the actual opening degree of the valve is initiated.

The KP-factor and the KI-factor are used for a period of time, but only until the actual temperature of hot water in the secondary circuit changes to a temperature outside a dead-band of, as example, plus or minus 0.5°C compared to a set temperature of hot water in the secondary circuit. At any later time, where new use of hot water is initiated, one or more new periods of sampling of the actual opening degree of the valve is initiated.

Control of the opening degree of the valve may be performed by the PI controller several times during the use of hot water. For some valves, constant adjustment of the opening degree of the valve may increase a risk of either the valve body of the valve or the actuator of the valve, or both the valve body of the valve and the actuator of the valve, suffering excess mechanical wear over time. The risk of such excess mechanical wear may result in in a need to exchange the valve earlier than expected.

In order to reduce the risk of excess mechanical wear of the valve body of the valve and/or the actuator of the valve, the PI controller only initiates control, when a difference between the user's desired temperature of hot water and the actual temperature of hot water in the second circuitry increases to more than a certain value. As example, the PI controller does not initiate control of the opening degree of the valve as long as the temperature difference between the user's desired temperature of hot water and the actual temperature of hot water in the secondary circuit is below 0.5°C.

Only when the difference between the user's desired temperature of hot water and the actual temperature of hot water in the secondary circuit increases to more than 0.5°C, the PI controller initiates control of the opening degree of the valve, that is, initiates sampling of the opening degree of the valve and possibly increasing the opening degree of the valve in order to increase a flow of hot water in the primary circuit and thus increasing the temperature of hot water in the secondary circuit.

Also, when the difference between the user's desired temperature of hot water and the actual temperature of hot water in the secondary circuit decreases to below 0.5°C, the PI controller initiates control of the opening degree of the valve, that is, initiates a decrease of the opening degree of the valve in order to decrease the flow of hot water in the primary circuit and thus decrease the temperature of hot water in the primary circuit.

A PI controller, operating with a dead-band between the user's desired temperature of hot water and the actual temperature of hot water in the secondary circuit, as example 0.5°C, limits the frequency of control of the opening degree of the valve, and thus limits the risk of the valve body of the valve and/or the actuator of the valve suffering excess mechanical wear.

In systems, where water flows, such as a water heating system, and where an opening and closing of a valve takes place, there is always a risk of harmonic pulsations of water, also called water hammering, in the primary circuit and possibly also in the secondary circuit. Harmonic pulsations of water in a circuit may result in excess wear of the one or more valves constituting part of the circuit, and may also result in possible damage to pipes and other elements of the circuit. Therefore, there is a desire and need for limiting, and possibly eliminating, the risk of harmonic pulsations of water.

In a preferred embodiment, the PI controller constantly monitors end detects the temperature response in dependence of the opening degree of the valve. If the temperature response results in an oscillating temperature curve, and results, within a certain time range, in a plurality of temperature values exceeding the set temperature value more than a certain temperature difference, the opening degree of the valve is decreased, thereby limiting the temperature oscillations and thus limiting, preferably eliminating, temperature values exceeding the set temperature value by more than the certain temperature difference and finally limiting, preferably eliminating, harmonic pulsations of water in the secondary circuit.

As example, if and when the PI controller detects three consecutive temperature values exceeding a set temperature value by more than a certain temperature difference, as example a temperature difference of 8°C, and as example, within a time range of 120 seconds, the PI controller decreases the opening degree of the valve. As example, the PI controller decreases the opening degree of the valve by 30% of the opening degree before detecting the three consecutive temperature values exceeding a set temperature value.

Based upon the now decreased opening degree of the valve, the KP-factor and the KI-factor is adjusted. The adjustment of the KP-factor and the KI-factor results in both the KP-factor and the KI-factor having a lower value than before the opening degree of the valve was decreased to a lower value, as example 30% of the opening degree before detecting the three consecutive temperature values exceeding a set temperature value.

The result of the relative large decrease of the opening degree of the valve is that the set temperature value will be obtained later than if the opening degree of the valve was not controlled because of harmonic pulsations. However, harmonic pulsations of water are avoided, or if present harmonic pulsations of water, harmonic pulsations of water are stopped immediately.

The temperature sensor used in the secondary circuit for monitoring and detecting the temperature of hot water at the heat exchanger secondary circuit outlet has a fast response time. Preferably, the response time of the temperature sensor has a so-called T50% value of less than 3 seconds, possibly 1.5 seconds or less. T50% represents the time for the temperature sensor to adapt to 50% of the temperature change from an initial temperature value measured by the sensor to a subsequent decreased or increased temperature value measured by the sensor. Preferably, the temperature sensor is a resistance temperature detector, as example PT100 from the company JUMO Gmbh. & Co. KG. Other types of temperature sensors may be used.

The valve used in the primary circuit for controlling water flow through the secondary circuit is preferably a valve with an actuator providing a fast adjustment of the valve body and thus a fast adjustment of the opening degree of the valve. Preferably, the control time of the valve body is less than 3 seconds, preferably 1.5 seconds or less, for adjusting the opening degree of the valve from a fully open position of the valve body to a fully closed position of the valve body, or vice versa, from a fully closed position of the valve body to a fully open position of the valve body. Preferably, the actuator of the valve is a stepper motor. Other types of actuators for the valve body may be used.

The valve preferably has a built-in differential pressure valve to eliminate any excess pressure in the primary circuit. The differential pressure valve eliminates any errors, which otherwise may occur, when measuring the flow of water in the primary circuit, and originating from a pressure difference in the primary circuit between the inlet of the valve and the outlet of the valve. A one-to-one correlation between the flow of water through the valve and the opening degree of the valve may be obtained by relieving a possible pressure difference across the valve. Accordingly, only by monitoring and determining an opening degree of the valve, by use of the PI controller, a flow of water through the primary circuit may be determined.

Apart from an operational mode described above, the heating system of the invention preferably also has a so-called standby mode and a so-called holiday mode.

Standby mode is initiated when the opening degree of the valve has been at a certain relatively low value for a certain period of time. As example, the heating system may enter into standby mode when the opening degree of the valve has been less than 3% for a period of time of 5 minutes. The opening degree of the valve having been at a certain relatively low value for a certain period of time results from no hot water being used at the secondary side of the heating system for a certain shortened period of time.

During the standby mode, the heat exchanger of the heating system only needs to maintain a certain limited temperature of the water at the secondary circuit.

As example, the limited temperature maintained in the heat exchanger secondary circuit outlet may be 43°C. When the temperature of the water at the heat exchanger secondary circuit outlet decreases to a temperature somewhat below 43°C, an increase in the opening degree of the valve, only for a short period of time, is needed to increase the temperature of the water at the heat exchanger secondary circuit outlet to 43°C. The intervals may be relatively long between periods of time, where an increase in the opening degree of the valve, only for a short period of time, is initiated in order to maintain a certain limited temperature.

Holiday mode is initiated, when standby mode has been present for a certain period of time. As example, the heating system may enter into holiday mode, when the heating system has been in standby mode for 24 hours. The heating system having been in standby mode for a relatively long period of time results from no hot water being used at the secondary side of the heating system for a certain prolonged period of time.

Preferably, the certain prolonged period of time, which has to elapse before the heating system enters into holiday mode, may be adjusted between a minimum value and a maximum value according to a selection by the user of the heating system. As example, the certain prolonged period of time may be adjusted to between 1 hour and 100 hours. If the certain prolonged period of time is adjusted to 100 hours or any other maximum value of the certain prolonged period of time, the heating system considers that as the user selecting that the heating system never shall enter into holiday mode.

During holiday mode, the temperature set point of the water at the heat exchanger secondary circuit outlet is set to a certain limited value, as example 25°C. The temperature value set during holiday mode depends on the temperature of the water at the heat exchanger secondary circuit inlet. The temperature set point of the water at the heat exchanger secondary circuit outlet always has to be the same or higher than the temperature of the water at the heat exchanger secondary circuit inlet. Also, if the water of the primary circuit is part of a domestic heating system, often a certain temperature difference is needed between the temperature of the water at the heat exchanger secondary circuit outlet and the temperature of the water at the heat exchanger secondary circuit inlet.

Operational mode is initiated, subsequent to the heating system having been in standby mode or holiday mode, and when use of hot water at the secondary circuit is determined. Determination of when operational mode is to be initiated is established, when the temperature of the water at the heat exchanger secondary circuit outlet decreases to below a set point temperature, and when, at the same time, the opening degree of the valve increases to a certain higher value.

As example, operational mode is initiated, subsequent to the heating system having been in standby mode, when the temperature of the water at the heat exchanger secondary circuit outlet decreases to below 43°C during standby mode and the opening degree of the valve, at the same time, increases to more than 3% of full opening degree of the valve.

Or, as example, operational mode is initiated, subsequent to the heating system having been in holiday mode, when the temperature of the water at the heat exchanger secondary circuit outlet decreases to below 25°C during holiday mode and the opening degree of the valve, at the same time, increases to more than 3% of full opening degree of the valve.

## Claims

1. A method of controlling a temperature of water to be heated via a heat exchanger for performing heat exchange between a heat exchanger primary circuit hot water and a heat exchanger secondary circuit water to be heated, and a flow rate regulator valve for regulating a flow rate of the primary circuit hot water, wherein said method comprises the steps of:
- providing a PI controller capable of monitoring a temperature sensor and detecting a temperature of water at a heat exchanger secondary circuit water outlet and capable of monitoring and controlling a flow rate regulator valve at an outlet from the heat exchanger primary circuit water outlet,
- setting, in the PI controller, a set heating temperature of the water at the heat exchanger secondary circuit outlet, and
- the PI controller determining an opening degree of the flow rate regulator valve at the heat exchanger primary circuit outlet,
- the PI controller detecting a temperature difference between the set temperature and a temperature of the water at the heat exchanger secondary circuit outlet, and not detecting a temperature of water at an inlet of the heat exchanger secondary circuit,
- at the same time as detecting said temperature difference, the PI controller detecting an opening degree of the flow rate regulator valve, and not detecting a flow rate of the primary circuit hot water, and not detecting a flow rate of the secondary circuit water,
- the PI controller determining, when the temperature difference between a temperature of the secondary circuit water at the outlet from the heat exchanger and the set temperature decreases to a value lower than a set temperature difference of more than 0°C, as example a set temperature difference of 0.5°C, and when detected
- the PI controller controlling the opening degree of the flow rate regulator valve so that at least one of the following conditions is established:
- if said temperature difference is lower than the set temperature difference, as example is lower than 0.5°C, the opening degree of the valve having a set initial value between 0% and 20%, possibly between 1% and 15%, possibly between 2% and 8%, of a full opening degree of the valve;
- if said temperature difference is higher than the set temperature difference, as example is higher than 0.5°C, the opening degree of the valve having a subsequent value of more than the set initial value of the full opening degree of the valve.

2. A method according to claim 1, whereby control of the temperature of water at the heat exchanger secondary circuit outlet is performed only by control of the opening degree of the flow rate regulator valve at the heat exchanger primary circuit outlet.

3. A method according to claim 1 or 2, where the PI controller samples the opening degree of the flow rate regulator valve during use of secondary circuit hot water, and where the PI controller changes values of the KP factor and the KI factor from initial values before sampling to subsequent values after sampling, and based upon the an average value of the opening degree of the flow rate regulator valve during sampling.

4. A method according to any of the preceding claims, where the PI controller monitors and detects a temperature response in dependence to the opening degree of the valve, and if the temperature response result in an oscillating temperature curve and results in a plurality of temperature values exceeding a set value temperature more than a certain temperature difference, and within a certain time range, the PI controller controls the opening degree of the valve by decreasing the opening degree, thereby limiting the oscillations and thus limiting, possibly eliminating, temperature values exceeding a set value temperature by more than the certain temperature difference.

5. A method according to any of the preceding claims, where the heating system is capable of entering into an operational mode, a standby mode and a holiday mode,
- where the operational mode is initiated, when the temperature of the second circuit water from the outlet of the heat exchanger decreases to below a value between 45°C and 80°C, preferably decreases to below a value between 45°C and 65°C, possibly decreases to below a value of 52°C, and the opening degree of the flow rate regulator valve is equal to or more than 3%,
- where the standby made is initiated when the opening degree of the flow rate regulator valve is less than 3% for a period of time more than 300 seconds, and during which standby mode the temperature of the second circuit water from the outlet of the heat exchanger is maintained at a limited temperature between 25°C and 55 °C, possibly is maintained at a limited temperature between 30°C and 45°C,
- where the holiday mode is initiated when the heating system has been in standby mode for a period of time more than 1 hour, preferably more than 24 hours, and during which holiday mode the temperature of the second circuit water from the outlet of the heat exchanger is maintained at a limited temperature of less than 30 °C, possibly is maintained at a limited temperature of less than 25°C.

6. A heating system with a heat exchanger for heating water in a secondary circuit of the heat exchanger by water in a primary circuit of the heat exchanger, said heating system having a temperature sensor at a secondary circuit outlet of water from the heat exchanger, and said heating system having a flow rate regulator valve at a primary circuit outlet of water from the heat exchanger, and said heating system having a PI controller connected to the temperature sensor at the secondary circuit outlet of the heat exchanger and having the PI controller connected to the flow rate regulator valve at the primary circuit outlet of the heat exchanger, and the PI controller not being connected to, and the PI controller therefore not monitoring, a temperature sensor at a secondary circuit inlet of water to the heat exchanger.

7. A heating system according to claim 6, said PI controller of the heating system not being connected to, and the PI controller therefore not monitoring, a flow rate sensor at a secondary circuit outlet of water from the heat exchanger

8. A heating system according to claim 6 or 7, said PI controller of the heating system not being connected to, and the PI controller therefore not monitoring, a flow rate sensor at a secondary circuit inlet of water to the heat exchanger.

9. A heating system according to any of claims 6-8, said PI controller of the heating system not being connected to, and the PI controller therefore not monitoring, a temperature sensor at a primary circuit outlet of water from the heat exchanger

10. A heating system according to any of claims 6-9, said PI controller of the heating system not being connected to, and the PI controller therefore not monitoring, a temperature sensor at a primary circuit inlet of water to the heat exchanger.
